Europäisches Patentamt

(19) **European Patent Office**

Office européen des brevets

(11) Publication number: **0 088 264**
**B2**

(12) # NEW EUROPEAN PATENT SPECIFICATION

(45) Date of publication of the new patent specification:
**30.08.89**

(21) Application number: **83101592.0**

(22) Date of filing: **19.02.83**

(51) Int. Cl.⁴: **B 29 C 47/02**, G 02 B  6/04,
H 01 B  13/14

(54) Cables with extruded dielectric.

(30) Priority: **04.03.82 GB 8206374**

(43) Date of publication of application:
**14.09.83 Bulletin 83/37**

(45) Publication of the grant of the patent:
**14.05.86 Bulletin 86/20**

(45) Mention of the opposition decision:
**30.08.89 Bulletin 89/35**

(84) Designated contracting states:
**AT BE CH DE FR IT LI**

(56) References cited:
**DE–A– 2 851 955**
**DE–B– 1 231 419**
**DE–B– 2 513 724**

(73) Proprietor: **STC PLC**
**10, Maltravers Street**
**London, WC2R 3HA (GB)**

(72) Inventor: **Jones, Martin Philip**
**18 Porteous Crescent**
**Chandlers Ford Hampshire (GB)**

(74) Representative: **Feldkamp, Rainer, Dipl.-Ing. et al**
**Patentanwälte Dipl.-Ing. Curt Wallach Dipl.-Ing.**
**Günther Koch Dipl.-Ing . Rainer Feldkamp Dipl.-**
**Phys.Dr. Tino Haibach Kaufingerstrasse 8 Postfach**
**920**
**D-8000 München 2 (DE)**

EP 0 088 264 B2

## Description

This invention relates to a cable with extruded dielectric layer, particularly but not exclusively an optical cable for submerged telecommunication systems and to a method and apparatus of making such a cable. At certain points during the manufacture of the cable it becomes necessary to make a joint in the optical fibres in the centre of the cable. The centre conductor and extrusion processes have a buffer stock of stored cable lengths between them, and these lengths are jointed together using a joint of the same diameter which requires subsequent rectification to restore the centre conductor to its required characteristics. A cable of this kind is disclosed in DE-A-28 51 955. In addition there is disclosed a connection of the ends of two cables, which is obviously not represented correctly by the corresponding Fig. 9, because, as stated in the description of that document, the cable sheath is jointed at the same place as the cable core and the armouring layer. It is the object of the invention to provide a cable which is watertight at the joints. In particular it is a requirement that the thickness of the dielectric layer should remain constant and should not be less than a predetermined minimum thickness in order to provide the necessary dielectric properties.

According to the present invention there is provided a cable comprising a cable core with at least one conductor, a tensile strength member and a dielectric layer extruded over the cable core and/or strength member, the cable core and/or strength member comprising pieces which are jointed to each other, with a bulge being formed at the joint, characterized in that the dielectric layer is formed nevertheless by an un-interrupted, i. e. not jointed, layer over the length of the cable including the bulge at the joint.

The method of making the cable is characterized in effecting a joint in the conductor and/or strength member prior to extrusion of the dielectric layer, and passing the joint through an extruder so that the dielectric layer is extruded over the joint, the extruder head having a variable-size extruder point which accommodates the joint as it passes through the extruder.

According to another aspect of the present invention there is provided apparatus for extruding dielectric material over a jointed cable comprising an extruder point having a variable orifice defined by a number of segments fitted together to form a substantially frusto-conical extruder point, and means for urging the segments together to define a nominal extruder point orifice.

In order that the invention can be clearly understood reference will now be made to the accompanying drawings in which :

Figure 1 shows a cross-section through a submarine cable to be manufactured in accordance with the present invention ;

Figure 2 is a block diagram showing the process for making the cable according to the present invention ;

Figure 3 shows a longitudinal cross-section through an extruder device according to an embodiment of the present invention ; and

Figure 4 is a front view of part of the extruder device of Figure 3, Figs. 4A and 4B showing a part of Fig. 4.

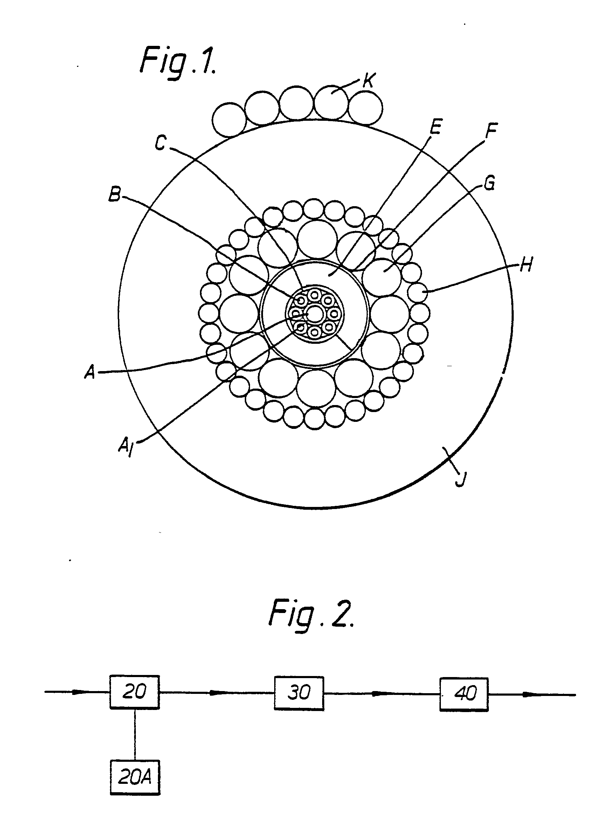

Referring to Fig. 1 the cable comprises an optical fibre package at the centre consisting of a package strength member A made of high tensile steel wire which may, if desired, be copper plated to improve its electrical conductivity, and coated with a plastics coating $A_1$. Around the package strength member A are eight single mode secondary coated optical fibres B which are held in a package whipping C. We prefer a fibrous Kevlar ribbon which in the particular embodiment described has about 200 denier.

The fibre package and the annular gap between the fibre package and the internal bore of a tubular member E, are impregnated and filled respectively with a water blocking compound. The main function of this water blocking compound is to substantially restrict longitudinal infiltration of water along the core should the cable become damaged.

Around the core member E is a laminate sealing strip F. This is a heat sealable plastics tape, e. g. ethyl acrylic material bonded to both sides of a thin aluminium tape, and is heat sealed to member E to form an hermetic seal around it.

Around the tubular core E are applied two layers of tensile strength elements for the cable, G and H respectively, which bridge against one another so that there is formed a crush-resistant electrically conductive tensile strength member which provides the tensile strength the cable is required to have. For submarine cables this could be of the order of 18 tons breaking strength. It is also crush-resistant so that the fibres loosely held in the central bore of the tubular member are substantially free of compressive stresses in use of the cable.

Extruded around the outside of and directly onto the outer layer of strength member wires is a polyethylene sheath J which forms an electrical insulation between the outside and any electric power or electric signal which is, in use of the cable, transmitted along the conductive central core E.

One or more armouring layers K can be applied to the outside of the insulation J.

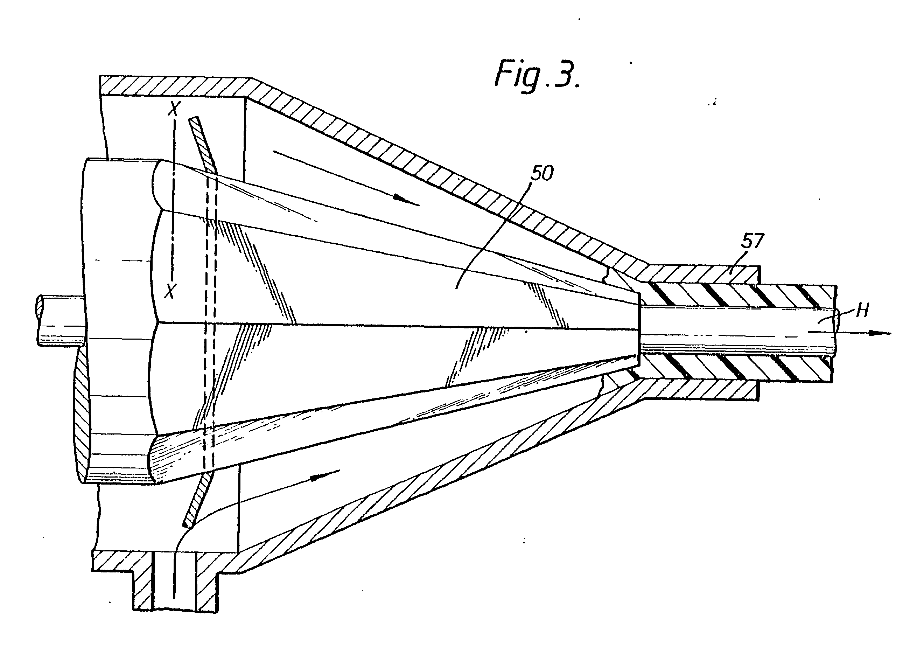

The cable is manufactured in the following way. Referring to Fig. 2 the optical fibre package comprises eight optical fibres B with a central king wire A. This package enters the partially opened C-shaped tube E at 20A and at station 20 the tube is closed around the optical fibers. The closed aluminium C-section tube housing the optical fibres passes through to station 30 at which the strength members G and H are applied.

From station 30 the core with the strength members around it passes to station 40 at which high density polythene J is extruded over the strength members to complete the optical fibre submarine cable in its lightweight version.

Although not shown armouring wires could be applied around the outside of the dielectric J in order to protect the cable in shallow water.

During the manufacture of this cable a point in time arrives at station 20 when at least one of the optical fibres needs to be joined to another optical fibre and the manufacturing process is modified as follows. Before the closed C-section tube housing the optical fibres reaches the strength member stranding station 30, a joint is made in the optical fibres and in order to house this joint the C-section tube is provided with a ferrule housing of slightly larger diameter than the outside diameter of the C-section tube. This « bulge » in the C-section tube passes through the stranding station 30 which produces a corresponding « bulge » in the strength member around the ferrule in the C-section tube. When this slightly larger portion of cable enters the extrusion station 40 the variable orifice extruder point in the station 40 expands slightly to accommodate the bulge in the strength members.

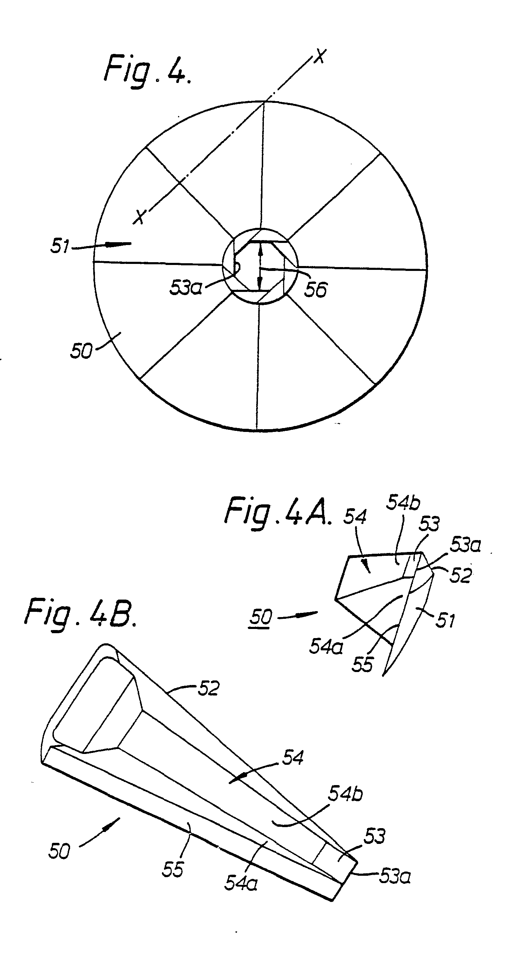

The variable orifice extruder point is shown in detail in Figures 3 and 4 and reference will now be made to those Figures.

Fig. 4A is a front perspective view of one of the segments 50 and Fig. 4B shows an underneath plan view of the same segment. Fig. 4 simply shows the eight segments 50 fitted together and viewed from the front i. e. the point at which the cable leaves the extruder head.

Referring to Figures 3 and 4, the variable orifice extruder comprises a plurality of segments 50 which are made of metal and are generally triangular in shape. The segments fit together to form a frusto-conical outer surface 51. Each has a first edge surface 52, and an inner face surface 53 which embraces the surface of the strength members H as the strength members and the core of the cable pass through the extruder, and an opposite under edge surface 55.

Each segment is arranged to pivot at its end remote from the extruder point about an axis which is substantially parallel to the surface 53 and bisects the angle between edges 52 and 53A. Also on that surface is a rib 54 which performs two functions. Firstly it has a taper 54b with respect to the axis of the cable which is effective to provide a « run-up » against the cable passing through the extruder head. Secondly the rib 54 provides an abutment 54a against which the adjacent segment will rest in its normal position. A strong circumferential spring (not shown in the drawing) tends to force all the segment tips radially inwardly about their pivots until the abutments 54a resist further inward motion so that the orifice of the extruder head defines a slab-sided circle which just fits the outer surface of the strength members H on the cable core. This slabsided circle is indicated by the reference 56 in Fig. 4.

When a bulge in the strength members passes through the extruder head the petals open slightly to enable the bulge to pass through when the bulge runs up the taper 54b of the rib 54. This minimises the additional draw-off tension required in pulling the cable through the extruder since the spring which forces the segments together is extremely strong and without the fine run-up would tend to require excessive pull on the cable to draw in through and open the segments.

Each segment edge which embraces the next segment performs a « wiping action » and is effective to seal the edges from intrusion by extruder material, and at the same time the wiping action tends to keep the edges clean.

After the bulge has passed through the segments close back to the nominal orifice size 56.

The movement anticipated can correspond to a change in radial dimension of around 5 times the diameter of the strength member. As a result the plastics dielectric will be thinner at the point of the bulge because the outer diameter of the extruder head or die represented by the cylindrical portion 57, remains constant. If necessary this can be made good by bonding further dielectric material over the thin dielectric to reinstate the required thickness or, if the internal joint in the fibres and/or strength member is only temporary, then a jointing operation can be performed followed by reinstatement of the sheath. Either way the invention enables the extrusion process to work continuously and not be stopped when a joint, temporary or permanent, is made in the cable and prior to reaching the extruder point.

Alternatively a variable die 57 could be constructed on the same lines as the extruder point so that just before the « bulge » reaches the extruder point, the die opens to provide an increase in dielectric thickness, and closes at the same position behind the « bulge » after it has passed through. The die and extruder point could be mechanically linked to achieve this, or hydraulically and electronically controlled to achieve the desired opening.

The die would open by the same amount or more than the extruder point, and may open to a point where the extrudate no longer contacts the die, in which case vacuum in the extruder head would be relied upon to draw the extrudate down onto the strength member. The effect of the die would be to maintain the same dielectric thickness over the joint as over the rest of the cable.

## Claims

1. Cable comprising a cable core with at least one conductor (B), a tensile strength member and a dielectric layer (J) extruded over the cable core and/or tensile strength member, the cable core and/or strength member comprising pieces which are jointed to each other, with a bulge being formed at the joint characterized in that the dielectric layer is formed nevertheless by an un-interrupted, i. e. not jointed, layer over the length of the cable including the bulge at the joint.

2. Method of making a cable according to claim 1, characterized in that the joint is effected in the conductor (B) and/or strength member prior to extrusion of the dielectric layer (J), and that the joint is passed through an extruder so that the dielectric layer (J) is extruded over the joint, the extruder head having a variable-size extruder point which accommodates the joint as it passes through the extruder.

3. Method as claimed in claim 2, characterized in that the joint is drawn through the extruder and forces the extruder point open against the return force of a spring at the extruder point.

4. Method of making a cable as claimed in claim 2 or claim 3, characterized in that a ferrule is inserted in the strength members for joining the strength members at the joint prior to the extrusion process.

5. Method as claimed in any preceding claim, characterized in that after the dielectric has been extruded on the cable, the dielectric in the area of the joint is removed and a temporary joint underneath the dielectric is replaced by a permanent joint in the conductor and/or strength member, and that the dielectric is reinstated.

6. Method as claimed in any preceding claim, characterized in that a die associated with the extruder point also varies in size so as to tend to maintain the same dielectric thickness over the joint.

7. Apparatus for extruding dielectric material over a jointed cable characterized in that there are provided an extruder point having a variable orifice defined by a number of segments (50) fitted together to form a substantially frustoconical extruder point, and means for urging the segments together to define a nominal extruder point orifice.

8. Apparatus as claimed in claim 7, characterized in that each segment has a longitudinal rib (54) which bears on the cable passing through and defines an inclined plane against which the joint will bear to force the segments (50) apart to accommodate the joint.

9. Apparatus as claimed in claim 7 or claim 8, characterized in that each segment (50) pivots about an axis which is inclined to a circular plane defined by the larger end of the frusto-conical shape and which is inclined relative to the chord joining the points of the segment lying on that circle.

10. Apparatus as claimed in claim 7, 8, or 9, characterized in that it carries a variable die associated with the variable extruder point.

11. Apparatus as claimed in claim 10, characterized in that the die is arranged to open by the same amount or more than the variable extruder point.

**Patentansprüche**

1. Kabel enthaltend eine Kabelseele mit mindestens einer Ader (B), ein zugfestes Element und eine dielektrische Schicht (J), die um die Kabelseele und/oder das zugfeste Element extrudiert ist, bei dem die Kabelseele und/oder das zugfeste Element aus miteinander verbundenen Stücken besteht, wobei ein Wulst an der Verbindungsstelle gebildet ist, dadurch gekennzeichnet, daß die dielektrische Schicht dennoch durch eine ununterbrochene, das heißt nicht verbundene, Schicht über die Länge des Kabels unter Einschluß des Wulstes an der Verbindungsstelle gebildet ist.

2. Verfahren zur Herstellung eines Kabels nach Anspruch 1, dadurch gekennzeichnet, daß die Verbindungsstelle in der Ader (B) und/oder dem zugfesten Element vor der Extrusion der dielektrischen Schicht (J) ausgeführt ist, daß die Verbindungsstelle den Extruder passiert, so daß die dielektrische Schicht (J) über die Verbindungsstelle hinweg extrudiert ist, und daß der Extruderkopf eine in der Größe veränderliche Extruderspitze hat, die sich der Verbindungsstelle anpaßt, wenn diese den Extruder passiert.

3. Verfahren nach Anspruch 2, dadurch gekennzeichnet, daß die Verbindungsstelle durch den Extruder gezogen wird und dabei die Extruderspitze gegen die Kraft einer an der Extruderspitze befindlichen Feder öffnet.

4. Verfahren zur Herstellung eines Kabels nach Anspruch 2 oder 3, dadurch gekennzeichnet, daß vor dem Extrusionsprozess an der Verbindungsstelle ein Ringbeschlag zum Verbinden der zugfesten Elemente in dieselben eingefügt ist.

5. Verfahren nach einem der vorangehenden Ansprüche, dadurch gekennzeichnet, daß nach der Extrusion der dielektrischen Schicht auf das Kabel, diese im Bereich der Verbindungsstelle beseitigt, und eine vorläufige Verbindung unter der dielektrischen Schicht durch eine permanente Verbindung der Ader und/oder des zugfesten Elements ersetzt und die dielektrische Schicht wiederhergestellt wird.

6. Verfahren nach einem der vorhergehenden Ansprüche, dadurch gekennzeichnet, daß ein zur Extruderspitze zugehöriger Spritzkopf sich ebenfalls in seiner Größe verändert, so daß die Dicke der dielektrischen Schicht über die Verbindungsstelle hinweg konstant gehalten wird.

7. Vorrichtung zum Extrudieren dielektrischen Materials um ein Kabel mit Verbindungsstelle, dadurch gekennzeichnet, daß sie mit einer Extruderspitze ausgerüstet ist, die eine veränderliche öffnung besitzt, die durch eine Anzahl zusammenpassender Segmente (50) festgelegt ist, die eine im wesentlichen kegelstumpfförmige Extruderspitze bilden, und daß die Vorrichtung mit Mitteln zum Zusammendrücken der Segmente ausgerüstet ist um eine bestimmte öffnung der Extruderspitze festzulegen.

8. Vorrichtung nach Anspruch 7, dadurch gekennzeichnet, daß jedes Segment eine längsverlaufende Rippe (54) besitzt, die auf das durchlaufende Kabel drückt und die eine geneigte Fläche bildet, gegen die die Verbindungsstelle drückt um die Anpassung der Segmente (50) an die Verbindungsstelle zu erzwingen.

9. Vorrichtung nach Anspruch 7 oder 8, dadurch gekennzeichnet, daß sich jedes Segment (50) um eine Achse dreht, die gegen die kreisförmige Fläche geneigt ist, die durch das größere Ende des Kegelstumpfes gebildet ist, und die relative zu der Sehne geneigt ist, die die Spitzen der auf diesem Kreis liegenden Segmente verbindet.

10. Vorrichtung nach Anspruch 7 oder 8 oder 9, dadurch gekennzeichnet, daß sie einen zur veränderlichen Extruderspitze gehörenden veränderlichen Spitzkopf enthält.

11. Vorrichtung nach Anspruch 10 dadurch gekennzeichnet, daß der Spritzkopf so eingerichtet ist, daß er sich genauso weit oder weiter öffnet als die veränderliche Extruderspitze.

## Revendications

1. Câble comportant une âme centrale avec au moins un conducteur (B), un support de résistance à la traction et une couche diélectrique (J) extrudée sur l'ensemble de l'âme du câble et/ou le support de résistance à la traction, l'âme du câble et/ou le support de résistance se composant de plusieurs éléments réunis les uns aux autres avec formation d'un bourrelet au niveau du joint et caractérisés par le fait que la couche diélectrique est néanmoins formée par une couche ininterrompue, c'est-à-dire sans joint, sur toute la longueur du câble, y compris le bourrelet au niveau du joint.

2. Procédé de fabrication d'un câble selon la revendication 1 caractérisé en ce que le raccordement du conducteur (B) et/ou de l'élément de renfort est effectué avant l'extrusion de la couche diélectrique (J), et en ce que le raccord passe dans une extrudeuse de façon que la couche diélectrique (J) soit extrudée sur le raccord, la tête de l'extrudeuse ayant un point d'extrusion de dimension variable qui s'adapte à la dimension du raccord pour permettre le passage de ce dernier dans l'extrudeuse.

3. Procédé de fabrication selon la revendication 2, caractérisé en ce que le raccord est tiré à travers l'extrudeuse et oblige le point d'extrusion à s'ouvrir, à l'encontre de la force exercée par un ressort situé au point d'extrusion.

4. Procédé de fabrication selon la revendication 2 ou 3 caractérisé en ce qu'une bague est insérée entre les éléments de renfort pour assembler les éléments de renfort avant de procéder à l'extrusion.

5. Procédé de fabrication selon l'une quelconque des revendications précédentes caractérisé en ce qu'après que la couche diélectrique ait été extrudée sur le câble, la couche diélectrique est ôtée dans la zone du raccord, un raccord temporaire sous la couche diélectrique est remplacé par un raccord définitif dans le conducteur et/ou l'élément de renfort, et en ce que la couche diélectrique est remise en place.

6. Procédé de fabrication selon l'une quelconque des revendications précédentes caractérisé en ce qu'une filière, associée au point d'extrusion, peut varier en dimension de façon à tendre à maintenir une épaisseur constante de la couche diélectrique autour du raccord.

7. Dispositif pour extruder un matériau diélectrique sur un câble comportant un raccord, caractérisé en ce qu'il comporte un point d'extrusion à orifice variable constitué de plusieurs segments (50) assemblés pour former un point d'extrusion tronconique et de moyens pour solliciter les segments les uns vers les autres de façon à définir un orifice nominal du point d'extrusion.

8. Dispositif selon la revendication 7, caractérisé en ce que chaque segment possède une arrête longidutinale qui repose sur le câble qui passe au travers du dispositif et définit un plan incliné contre lequel le raccord vient prendre appui pour obliger les segments à s'écarter pour s'adapter à la dimension du raccord.

9. Dispositif selon la revendication 7 ou 8 caractérisé en ce que chaque segment (50) est monté pivotant autour d'un axe qui est incliné sur un plan circulaire défini par la plus grande extrémité de la forme tronconique et qui est incliné par rapport à la corde reliant les points du segment reposant sur ce cercle.

10. Dispositif selon la revendication 7, 8 ou 9 caractérisé en ce qu'il comporte une filière à dimension variable associée au point d'extrusion à dimension variable.

11. Dispositif selon la revendication 10 caractérisé en ce que ladite filière peut s'ouvrir de la même quantité que le point d'extrusion à dimension variable, ou d'une quantité supérieure.

# Fig.1.

# Fig.2.

# Fig.3.

50

57

X

X

H

# Fig. 4.

# Fig. 4A.

# Fig. 4B.